# EUROPEAN PATENT SPECIFICATION

(11) **EP 0 720 716 B1**
(45) Date of publication and mention of the grant of the patent: **03.06.1998**
(21) Application number: 94926321.4
(22) Date of filing: 14.09.1994
(51) Int. Cl.: F24C 3/08, A21B 1/02

(54) **GAS OVEN**
GASOFEN
FOUR A GAZ

(30) Priority: 25.09.1993 GB 9319828
(43) Date of publication of application: 10.07.1996
(73) Proprietor: TOM CHANDLEY LIMITED, Denton, Manchester M34 3RB (GB)
(72) Inventor: DOHREN, David George, Preston PR4 6EB (GB); McSTRAFICK, Paul, Huddersfield, West Yorkshire HD3 322 (GB)
(74) Representative: Sherrard-Smith, Hugh
(86) International application number: GB9402003
(87) International publication number: WO9508740

(56) References cited:
- DE-A- 816 303
- FR-A- 659 071
- FR-A- 986 466
- FR-A- 1 255 819

## Description

The invention relates to a gas oven and a method of operating a gas oven.

The present invention in particular relates to a gas oven comprising an oven chamber, a first burner unit and a second burner unit for providing heat to a bottom part of the oven chamber with side walls of the oven chamber separating the combustion area from the oven chamber.

The invention also relates to a method of operating a gas oven including an oven chamber comprising providing heat with a first burner unit and providing heat with a second burner unit, heat from the second burner unit going to a bottom part of the oven chamber.

In commercial multi deck baking ovens, a very close control of operating top and bottom heat input is required. Hitherto, commercial multi deck ovens have been predominantly electric, as it was found that the gas ovens available could not provide controllable top and bottom heat, with a sufficient degree of uniformity throughout the oven.

FR-A-986 466, FR-A-1255819 and DE-C-816303 disclose oven chambers having shelves for cooking on different levels. Heat is supplied to the chambers from the bottom via a burner 3 and through the side of the chamber. FR-A-659 071 supplies heat through the side walls of a chamber to heat shelves at different levels.

According to a first aspect of the invention, a gas oven is characterised in that the first burner unit is arranged to provide heat to the top part of the oven chamber and in that side walls of the oven chamber are insulated from the combustion area by thermal insulation in order to avoid overheating down the sides of the chamber.

Preferred embodiments of the invention, aim to provide a gas oven having a high degree of temperature control.

Preferably, the first and second burner units comprise a plurality of top and bottom burners.

Preferably, the top and bottom burners are ribbon burners.

Preferably, the second burner unit is situated beneath a sole tile, which sole tile forms a bottom part of the oven chamber.

Preferably, the bottom burners are distributed at intervals beneath The sole tile, across the depth of the oven chamber.

Preferably, the first burner unit acts as an ignition source for the second burner unit.

The first burner unit is preferably two single units situated within combustion areas behind the side walls of the oven chamber.

Preferably, the first burner unit is operable independently of the second burner unit. The second burner unit may not be able to operate independently of the first burner unit however.

Whilst the second burner unit may be inhibited from functioning without operation of the first burner unit, it should be understood that heat output of the first and second burner units may be independently regulated.

Preferably, heat output from the first burner unit is channelled behind the side walls of the oven chamber and over a top portion of the oven chamber.

The heat may be channelled over the top portion of the oven chamber by means of a plurality of heat radiant tubes.

Baffles may be provided within the radiant tubes so as to alter the pattern of heat distribution over the top portion of the oven chamber.

Gases and products of combustion from the first and second burner units may be substantially isolated from the oven chamber.

Preferably, following passage of heated gases and products of combustion over the top of the oven chamber, the gases and products of combustion are channelled via the oven chamber into an exhaust flue.

Preferably, the exhaust flue is situated centrally above the oven chamber.

Preferably the thermal insulation comprises insulating material.

Preferably, a temperature probe is provided having a temperature sensor to monitor oven chamber temperatures.

Preferably, the gas oven is modular such that a plurality of the gas ovens are stackable, one above the other. Preferably, the exhaust flue of each individual gas oven is designed such that, when a plurality of gas ovens are stacked one above the other, a common exhaust flue is thereby formed.

According to a second aspect of the invention, a method of operating a gas oven is characterised in that heat from the first burner unit is provided to the top part of the oven chamber and in that the heat from the combustion area is insulated from the side walls of the oven chamber whereby overheating down the sides of the chamber is prevented.

Preferably, the second burner unit comprises a plurality of bottom burners.

Preferably, the top and bottom burners are ribbon burners.

Preferably, the second burner unit is situated beneath a sole tile, which sole tile forms a bottom part of an oven chamber.

Preferably, the bottom burners are distributed at intervals beneath the sole tile, across the depth of the oven chamber.

Preferably, during an ignition stage, ignition of the first burner unit serves to ignite the second burner unit.

The first burner unit is preferably two single units situated within combustion areas behind the side walls of the oven chamber.

The method may comprise controlling the first and second burner units separately controllable, and when required operating both burner units simultaneously.

Preferably, the method comprises controlling the first burner unit independently of the second burner unit.

Preferably, the second burner unit is not operable independently of the first burner unit.

By way of example, a specific embodiment of the present invention will now be described, with reference to the accompanying diagrammatic drawings, in which:
Figure 1 is a schematic cross-sectional front end view of an embodiment of a gas oven according to the present invention as viewed along sectional lines A-A of Figure 4;
Figure 2 is a schematic cross-sectional side view of the gas oven of Figure 1 as viewed along sectional lines B-B of Figure 1;
Figure 3 is a schematic cross-sectional plan view of a bottom portion of the gas oven of Figures 1 and 2 as viewed along sectional lines C-C of Figure 1;
Figure 4 is a schematic cross-sectional plan view of a top portion of the gas oven of Figures 1, 2 and 3, as viewed along sectional lines D-D of Figure 1; and
Figure 5 is a view of a typical front control panel for the oven of Figures 1 to 4.

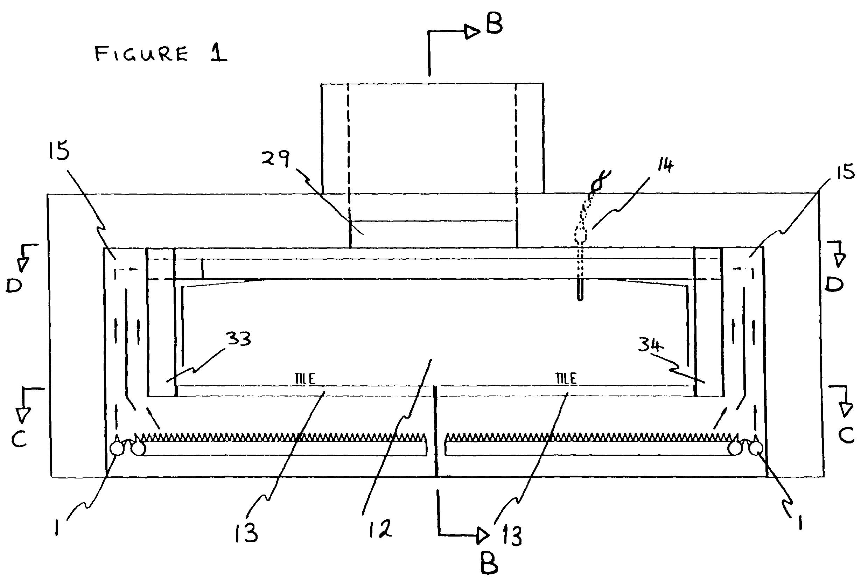

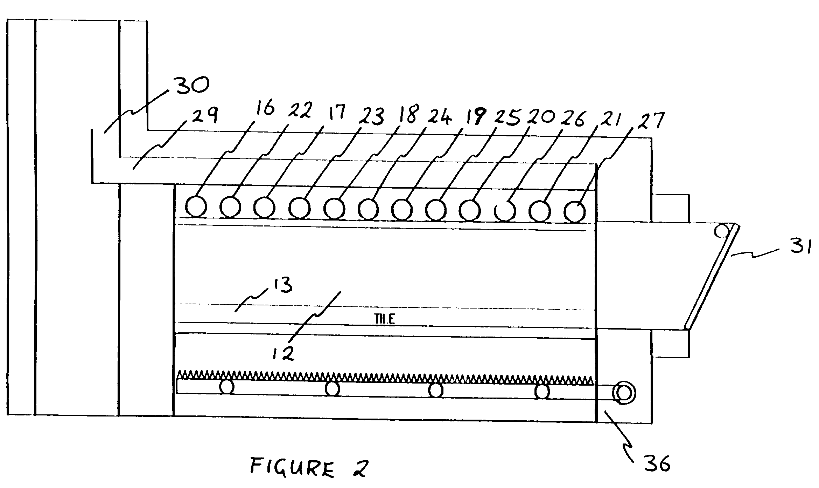

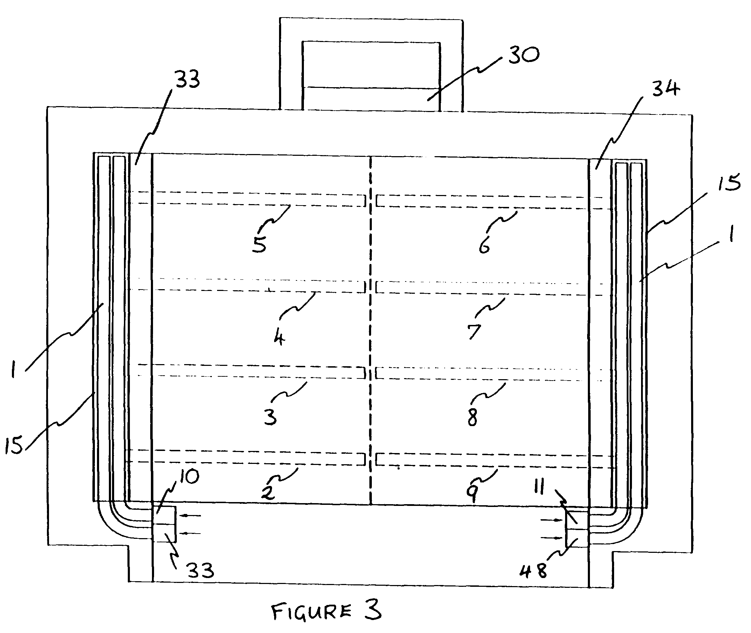

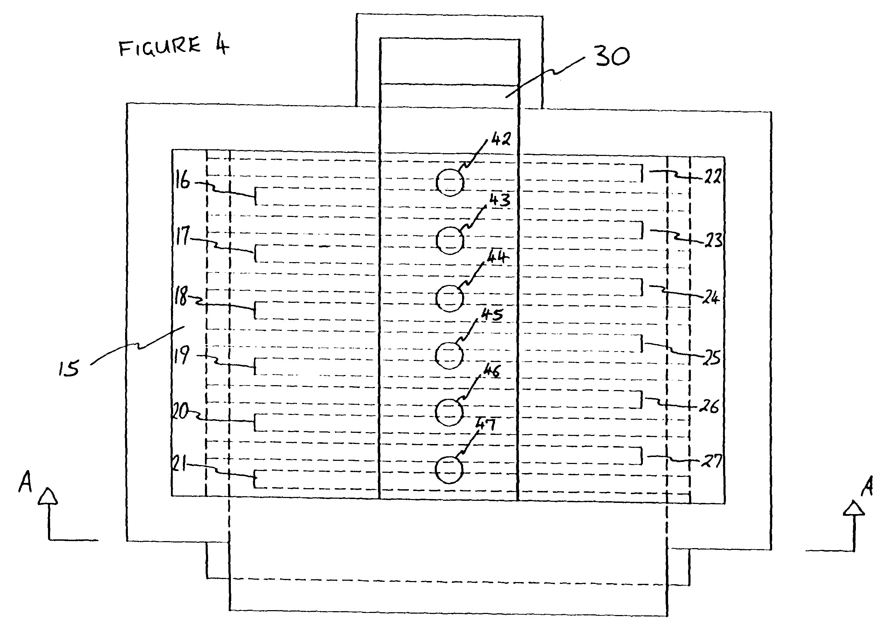

Referring to Figures 1 to 4, a gas oven is illustrated comprising a pair of top burner units 1 and a plurality of ribbon burners 2 to 9. The ribbon burners 2 to 9 together form a bottom burner unit. The ribbon burners 2 to 9 are fed by injector units 10, 11 which provide a combustible gas/air mixture. Each of the ribbon burners 2 to 9 are also connected to the top burners 1, which act as cross-lighters for the bottom burner unit.

Inside the oven, there is provided an oven chamber 12 in to which goods to be baked may be placed. The bottom of the oven chamber 12 is formed by a sole tile 13. The sole tile 13 typically comprises a ceramic tiling unit, the heat conductive properties of which are chosen so that once the sole tile 13 has been heated up by the bottom burner, the tile 13 will retain the heat, and only change temperature very slowly.

The top burners 1 are situated to the side of the oven chamber 12, and have a combustion area 15. This combustion area 15 connects with radiant tubes 16 to 27.

During baking, products give out moisture which needs to be exhausted. This is discharged with the products of combustion, through the exhaust channel 29.

An outlet end of the radiant tubes 16 to 27 discharges via the oven chamber 12 into the exhaust channel 29 which connects with an exhaust flue 30. In situations where multiple numbers of ovens are stacked one above the other, the exhaust flues 30 of each individual oven are shared.

The oven chamber 12 is accessible through an oven door 31. Air temperatures within the oven chamber 12 can be monitored via a temperature probe 14.

Thermal insulation is provided around the oven, and in particular, insulating material 33, 34 is provided around the combustion area 15 so as to avoid over heating down the sides of the oven chamber 12.

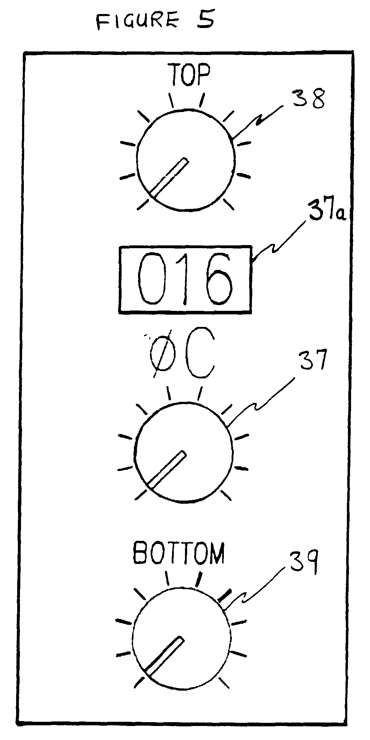

Figure 5 shows a possible front control panel configuration for the oven. The control panel comprises a temperature controller 37 and indicator 37a and two temperature control knobs 38, 39. Knob 38 controls the top burner 1 and knob 39 controls the bottom burner 2. The knobs are calibrated in percentage heat input on a time basis.

A typical operating sequence of the oven shown in Figures 1 to 4 will now be described.

During a warm up phase, the top burners are provided with a combustible mixture of gas and air and ignited. The bottom burner unit, comprising ribbon burner units 2 to 9 is also provided with a combustible mixture of gas and air at this stage, and this mixture is ignited by the top burner 1. In this manner, the top burner 1 acts as a cross-lighter for the ribbon burners 2 to 9.

Both the top and bottom burners are maintained in operation until a desired oven chamber temperature is achieved. The temperature of the oven chamber 12 is determined by a temperature sensor 14. Once the required temperature has been achieved, the top and bottom burner units operate on a percentage time basis determined by the top and bottom heat input settings. At some stages during the process the bottom burner 2 may be required to operate, but such operation would always take place in conjunction with operation of the top burner 1.

Upon obtaining the correct temperature, the product to be baked is put into the oven chamber 12 through the oven door 31. A typical product for baking in the oven might be a pizza, tea cakes or bread for instance.

All products during baking emit steam which needs to be exhausted. This steam is allowed to escape through the openings 42, 43, 44, 45, 46 & 47 and exhaust channel 29. In addition to this natural steam which is given off, some products actually require the introduction of extra steam into the oven chamber 12 during a process known as "steaming". This process gives a shine to the product.

During steaming steam is channelled into the oven chamber from a source (not shown). In order to avoid steam pressure from the source actually extinguishing the burners the exhaust channel and radiant tubes must be temporarily isolated or shielded from the effects of the steam.

During the process of cooking, oven chamber temperature monitored by the sensor 14 is displayed on the front wall of the oven, and the burners are thermostatically controlled,by means of temperature controller 37, control knobs 38, 39 and sensor 14.

The top control knob 38 controls the top burner 1 and the bottom control knob 39 controls the bottom burner 2. Both knobs 38, 39 are calibrated in percentage heat input settings. Temperature controller 37 displays desired oven temperature and indicator 37a shows actual oven chamber temperature, as detected by sensor 14.

In practice, due to the thermal properties of the sole tile 13, once the oven is at operating temperature the correct oven chamber temperatures can be maintained by the top burner 1 alone. Occasionally however, such as during periods when the oven door 31 has been opened, the bottom burner 2 may fire up to maintain the tile temperature.

The operation of the burners and disposal of products of combustion will now be described.

The ribbon burners 2 to 9 are supplied with a combustible mixture of gas and air via injector units 10 and 11. Similarly, the top burner unit 1 is provided with a combustible mixture from injector units 33, 48. Secondary air for aiding combustion of the ribbon burners 2 to 9 is drawn in through an aperture 36 in the front face of the oven.

Exhaust products from the ribbon burners 2 to 9, along with heat and exhaust products from burner 1 are drawn up the sides of the oven chamber 12 through the combustion area 15. In the combustion area 15 temperatures are very high, and to avoid hot spots at the sides of the oven chamber 12 it is necessary to provide extra thermal insulation 33, 34. The waste products from the burners are then drawn into the radiant tubes 16 to 27 above the sides of the oven chamber 12. Again, because the exhaust products are extremely hot at this point, means are required for moderating the temperature at the sides of the oven chamber 12 and by initially channelling the exhaust products through radiant tubes 16 to 27, a degree of temperature moderation is achieved.

Once the end region of each of the radiant tubes 16 to 27 has been reached, the exhaust products are discharged into the oven chamber 12, passing through ports 42-47 to be channelled back through exhaust channel 29 until they join the exhaust flue 30, whereupon they are expelled. The exhaust flue 30 runs substantially vertically and extends across the back of the oven. In this manner, if decks are stacked one on top of another, they may share a common exhaust flue.

The apparatus of the present invention provides a very effective means of providing a controllable gas oven, in which a high degree of uniformity of heat distribution within an oven chamber can be achieved.

Using gas as a fuel is currently very cost effective. It is therefore possible with the gas oven of the present invention, to provide a relatively cheap yet highly controllable gas oven.

Due to the controllability of the gas oven of the present invention, high quality baked products are achievable.

The gas oven of the present invention, is a very compact unit and designed with ease of stacking in mind. Multideck units are therefore readily achievable.

Although the front control panel is described as having knobs calibrated in percentage heat input, it will of course be readily apparent that they may be calibrated otherwise and, for instance, they may simply be marked in gas mark settings to directly control heat outputs of the burners.

It will be appreciated that other variations such as varying burner numbers and positioning, varying temperature sensor positioning etc. may be carried out by a man skilled in the art without departing from the scope of the invention.

The invention is not restricted to the details of the foregoing embodiment(s).

## Claims

1. A gas oven comprising an oven chamber (12), a first burner unit (1) and a second burner unit (2 to 9) for providing heat to a bottom part (13) of the oven chamber (12) with side walls of the oven chamber separating the combustion area from the oven chamber characterised in that the first burner unit (1) is arranged to provide heat to the top part of the oven chamber (12) and in that side walls of the oven chamber are insulated from the combustion area by thermal insulation (33, 34) in order to avoid overheating down the sides of the chamber.

2. An oven according to Claim 1, wherein the first and second burner units comprise a plurality of top (1) and bottom (2 to 9) burners.

3. An oven according to Claim 2, wherein the top and bottom burners are ribbon burners.

4. An oven according to any of the preceding claims, wherein the second burner unit is situated beneath a sole tile (13), which sole tile forms a bottom part of the oven chamber (12).

5. An oven according to Claim 4, wherein the bottom burners are distributed at intervals beneath the sole tile (13), across the depth of the oven chamber.

6. An oven according to any of the preceding claims, wherein the first burner unit (1) acts as an ignition source for the second burner unit.

7. An oven according to any of the preceding claims, wherein the first burner unit comprises two single units (1) situated within combustion areas behind the side walls of the oven chamber.

8. An oven according to any of the preceding claims, wherein the first burner unit is operable independently of the second burner unit.

9. An oven according to any of the preceding claims, wherein heat outputs of the first and second burner units are independently regulated.

10. An oven unit according to any of the preceding claims, wherein heat output from the first burner unit is channelled behind the side wall of the oven chamber and over a top portion of the oven chamber.

11. An oven according to Claim 10, wherein the heat is channelled over the top portion of the oven chamber by means of a plurality of heat radiant tubes.

12. An oven according to Claim 11, wherein baffles are provided within the radiant tubes (16 to 27) so as to alter the pattern of heat distribution over the top portion of the oven chamber.

13. An oven according to any of Claims 10, 11 or 12 wherein heated gases and products of combustion pass over the top of the oven chamber are then channelled via the oven chamber into an exhaust flue (3).

14. An oven according to any of the preceding claims wherein the thermal insulation comprises insulating material (33, 34).

15. An oven according to any of the preceding claims, wherein the oven is modular such that a plurality of such ovens are stackable, one above the other.

16. An oven according to Claim 15, wherein the exhaust flue (30) of each individual gas oven is designed such that, when a plurality of ovens are stacked one above the other, a common exhaust flue is thereby formed.

17. A method of operating a gas oven including an oven chamber (12) comprising providing heat with a first burner unit (1) and providing heat with a second burner (2 to 9) unit, heat from the second burner unit going to a bottom part (13) of the oven chamber characterised in that heat from the first burner unit is provided to the top part of the oven chamber and in that the heat from the combustion area is insulated from side walls of the oven chamber whereby overheating down the sides of the chamber is prevented.

18. A method according to Claim 17, wherein during an ignition stage, ignition of the first burner unit serves to ignite the second burner unit.

19. A method according to Claim 17 or 18, comprising controlling the first and second burner units separately and, when required, operating both burner units simultaneously.

20. A method according to any of Claims 17 to 19 comprising controlling the first burner unit independently of the second burner unit.

## Patentansprüche

1. Ein Gasofen, aufweisend eine Ofenkammer (12), eine erste Brennereinheit (1) und eine zweite Brennereinheit (2-9) zur Bereitstellung von Wärme an ein Bodenteil (13) der Ofenkammer (12), wobei Seitenwände der Ofenkammer den Verbrennungsbereich von der Ofenkammer abtrennen, dadurch gekennzeichnet, daß die erste Brennereinheit (1) dazu angeordnet ist, um Wärme an das cbenliegende Teil der Ofenkammer (12) bereitzustellen, und dadurch, daß Seitenwände der Ofenkammer durch eine thermische Isolierung (33, 34) von dem Verbrennungsbereich isoliert sind, um ein Überhitzen zu den Seiten der Kammer hinunter zu vermeiden.

2. Ein Ofen gemäß Anspruch 1, wcbei die ersten und zweiten Brennereinheiten eine Mehrzahl von obenliegenden Brennern (1) und Bodenbrennern (2-9) aufweisen.

3. Ein Ofen gemäß Anspruch 2, wobei die obenliegenden Brenner und die Bodenbrenner Langschlitzbrenner sind.

4. Ein Ofen gemäß einem der vorangehenden Ansprüche, wobei die zweite Brennereinheit unter eine Basisplatte (13) angeordnet ist, wobei die Basisplatte einen Bodenteil der Ofenkammer (12) bildet.

5. Ein Ofen gemäß Anspruch 4, wobei die Bodenbrenner in Abständen unter der Basisplatte (13) quer über die Tiefe der Ofenkammer verteilt sind.

6. Ein Ofen gemäß einem der vorangehenden Ansprüche, wobei die erste Brennereinheit (1) als eine Zündquelle für die zweite Brennereinheit fungiert.

7. Ein Ofen gemäß einem der vorangehenden Ansprüche, wobei die erste Brennereinheit zwei einzelne Einheiten (1) aufweist, die im Inneren der Verbrennungsbereiche hinter den Seitenwänden der Ofenkammer angeordnet sind.

8. Ein Ofen gemäß einem der vorangehenden Ansprüche, wobei die die erste Brennereinheit unabhängig von der zweiten Brennereinheit betreibbar ist.

9. Ein Ofen gemäß einem der vorangehenden Ansprüche, wobei Wärmeabgaben der ersten und zweiten Brennereinheiten unabhängig geregelt werden.

10. Ein Ofen gemäß einem der vorangehenden Ansprüche, wobei eine Wärmeabgabe von der ersten Brennereinheit hinter der Seitenwand der Ofenkammer und über einen obenliegenden Abschnitt der Ofenkammer gelenkt wird.

11. Ein Ofen gemäß Anspruch 10, wobei die Wärme über den obenliegenden Abschnitt der Ofenkammer mittels einer Mehrzahl von Wärmeabstrahlrohren geleitet wird.

12. Ein Ofen gemäß Anspruch 11, wobei Ablenkplatten innerhalb der Abstrahlrohre (16-27) vorgesehen sind, um das Muster der Wärmeverteilung über den obenliegenden Abschnitt der Ofenkammer zu verändern.

13. Ein Ofen gemäß einem der Ansprüche 10, 11 oder 12, wobei erwärmte Gase und Verbrennungsprodukte über die Oberseite der Ofenkammer strömen und anschließend über die Ofenkammer in einen Abgaszug (3) geleitet werden.

14. Ein Ofen gemäß einem der vorherigen Ansprüche, wobei die thermische Isolierung ein Isolationsmaterial (33, 34) aufweist.

15. Ein Ofen gemäß einem der vorherigen Ansprüche, wobei der Ofen modular ist, so daß eine Mehrzahl solcher Ofen übereinander steckbar sind.

16. Ein Ofen gemäß Anspruch 15, wobei der Abgaszug (30) eines jeden einzelnen Gasofens so konstruiert ist, daß, wenn eine Mehrzahl von Ofen übereinander gesteckt sind, dadurch ein gemeinsamer Abgaszug gebildet wird.

17. Ein Verfahren zum Betreiben eines Gasofens, der eine Ofenkammer (12) umfaßt, aufweisend das Bereitstellen von Wärme mit einer ersten Brennereinheit (1) und das Bereitstellen von Wärme mit einer zweiten Brennereinheit (2 bis 9), wobei Wärme von der zweiten Brennereinheit zu einem Bodenteil (13) der Ofenkammer geht, dadurch gekennzeichnet, daß Wärme von der ersten Brennereinheit an dem obenliegenden Teil der Ofenkammer bereitgestellt wird, und daß die Wärme von dem Verbrennungsbereich von den Seitenwänden der Ofenkammer isoliert wird, wodurch eine Überhitzung zu den Seiten der Kammer hinunter verhindert wird.

18. Ein Verfahren gemäß Anspruch 17, wobei während einem Zündzustand eine Zündung der ersten Brennereinheit dazu dient, die zweite Brennereinheit zu zünden.

19. Ein Verfahren gemäß Anspruch 17 oder 18, aufweisend das separate Steuern der ersten und zweiten Brennereinheiten, und, bei Bedarf, das Betreiben beider Brennereinheiten gleichzeitig.

20. Ein Verfahren gemäß einem der Ansprüche 17 bis 19, aufweisend das Steuern der ersten Brennereinheit unabhängig von der zweiten Brennereinheit.

## Revendications

1. Four à gaz comprenant une chambre (12) de four, un premier ensemble (1) de brûleurs et un second ensemble (2 à 9) de brûleurs destinés à fournir de la chaleur à une partie inférieure (13) de la chambre (12) du four, les parois latérales de la chambre du four séparant la zone de combustion d'avec la chambre du four, ***caractérisé en ce que*** le premier ensemble (1) de brûleurs est agencé pour fournir de la chaleur à la partie supérieure de la chambre (12) du four et ***en ce que*** les parois latérales du four sont isolées de la zone de combustion par un calorifugeage (33, 34) de manière à éviter une surchauffe le long des faces latérales de la chambre.

2. Four selon la Revendication 1, dans lequel les premier et second ensembles de brûleurs comprennent une pluralité de brûleurs supérieurs (1) et inférieurs (2 à 9).

3. Four selon la Revendication 2, dans lequel les brûleurs supérieurs et inférieurs sont des brûleurs-rubans.

4. Four selon l'une quelconque des Revendications précédentes, dans lequel le second ensemble de brûleurs est situé sous un carreau de sole (13), lequel constitue une partie inférieure de la chambre (12) du four.

5. Four selon la Revendication 4, dans lequel les brûleurs inférieurs sont répartis à intervalles sous le carreau de sole (13), sur la profondeur de la chambre du four.

6. Four selon l'une quelconque des Revendications précédentes, dans lequel le premier ensemble (1) de brûleurs agit comme source d'allumage pour le second ensemble de brûleurs.

7. Four selon l'une quelconque des Revendications précédentes, dans lequel le premier ensemble de brûleurs comprend deux unités individuelles (1) situées à l'intérieur des zones de combustion, derrière les parois latérales de la chambre du four.

8. Four selon l'une quelconque des Revendications précédentes, dans lequel le premier ensemble de brûleurs peut fonctionner indépendamment du second ensemble de brûleurs.

9. Four selon l'une quelconque des Revendications précédentes, dans lequel la puissance thermique des premier et second ensembles de brûleurs est réglée de manière indépendante.

10. Four selon l'une quelconque des Revendications précédentes, dans lequel la chaleur dégagée par le premier ensemble de brûleurs est canalisée derrière la paroi latérale de la chambre du four et au-dessus d'une section supérieure de la chambre du four.

11. Four selon la Revendication 10, dans lequel la chaleur est canalisée au-dessus de la section supérieure de la chambre du four au moyen d'une pluralité de tubes de chauffage rayonnants.

12. Four selon la Revendication 11, dans lequel des chicanes sont prévues à l'intérieur des tubes rayonnants (16 à 27) afin de modifier le schéma de répartition de la chaleur au-dessus de la section supérieure de la chambre du four.

13. Four selon l'une quelconque des Revendications 10, 11 ou 12, dans lequel les gaz chauffés et les produits de combustion passent au-dessus de la chambre du four et sont ensuite canalisés via la chambre du four dans une gaine d'évacuation (30).

14. Four selon l'une quelconque des Revendications précédentes, dans lequel le calorifugeage comprend un matériau isolant (33, 34).

15. Four selon l'une quelconque des Revendications précédentes, dans lequel le four est modulaire de telle façon qu'une pluralité de ces fours soient empilables l'un au-dessus de l'autre.

16. Four selon la Revendication 15, dans lequel la gaine d'évacuation (30) de chaque four à gaz individuel est conçue de telle façon que, lorsqu'une pluralité de fours sont empilés l'un au-dessus de l'autre, une gaine d'évacuation commune soit formée.

17. Mode de fonctionnement d'un four à gaz comportant une chambre (12) de four comprenant la fourniture de chaleur avec un premier ensemble (1) de brûleurs et la fourniture de chaleur avec un second ensemble de brûleurs (2 à 9), la chaleur du second ensemble de brûleurs allant vers une partie inférieure (13) de la chambre du four, ***caractérisé en ce que*** la chaleur du premier ensemble de brûleurs est fournie à la partie supérieure de la chambre du four et ***en ce que*** la chaleur de la zone de combustion est isolée des parois latérales de la chambre du four, empêchant ainsi toute surchauffe le long des faces latérales de la chambre.

18. Mode de fonctionnement selon la Revendication 17, dans lequel pendant une étape d'allumage, l'allumage du premier ensemble de brûleurs sert à allumer le second ensemble de brûleurs.

19. Mode de fonctionnement selon la Revendication 17 ou 18, comprenant le contrôle séparé des premier et second ensembles de brûleurs et, lorsque nécessaire, le fonctionnement simultané des deux ensembles de brûleurs.

20. Mode de fonctionnement selon l'une quelconque des Revendications 17 à 19, comprenant le contrôle du premier ensemble de brûleurs indépendamment du second ensemble de brûleurs.
